# EUROPEAN PATENT SPECIFICATION

(11) **EP 4 039 507 B1**
(45) Date of publication and mention of the grant of the patent: **29.05.2024**
(21) Application number: 22154277.2
(22) Date of filing: 31.01.2022
(51) Int. Cl.: B60C 15/02

(54) **MOTORCYCLE TYRE**
MOTORRADREIFEN
PNEUMATIQUE DE MOTOCYCLETTE

(30) Priority: 08.02.2021 JP 2021018440
(43) Date of publication of application: 10.08.2022
(73) Proprietor: Sumitomo Rubber Industries, Ltd., Kobe-shi, Hyogo-ken 651-0072 (JP)
(72) Inventor: FUKUSHIMA, Kazuki, Kobe-shi, 651-0072 (JP)
(74) Representative: Manitz Finsterwald Patent- und Rechtsanwaltspartnerschaft mbB

(56) References cited:
- EP-A1- 3 828 008
- US-A1- 2002 189 739
- US-B2- 10 807 418

## Description

### RELATED APPLICATIONS

This application claims the benefit of foreign priority to Japanese Patent Application No. JP2021-018440, filed February 8, 2021.

### FIELD OF THE INVENTION

The present invention relates to a motorcycle tyre.

### BACKGROUND OF THE INVENTION

For example, Patent Document 1 below has proposed a motorcycle tyre that improves the mountability performance on a rim and steering stability performance in a well-balanced manner by specifying an angle of the bead bottom surfaces with respect to the tyre axial direction. Related technologies are also known from EP 3 828 008 A1 and US 10 807 418 B2.

### [Patent Document]

[Patent Document 1]
Japanese Unexamined Patent Application Publication 2018-79802

### SUMMARY OF THE INVENTION

In recent years, further improvement in steering stability of motorcycle tyres has been required. One of the means for improving steering stability of motorcycle tyres is to improve rim-slip resistance performance. Unfortunately, increasing the rim-slip resistance performance tends to lead to deterioration of rim-mountability performance.

The present invention has been made in view of the above circumstance and has a major object to provide a motorcycle tyre capable of improving rim-slip resistance performance and steering stability while maintaining rim-mountability performance. The present invention is set out in the appended claims.

In one aspect of the disclosure, a motorcycle tyre includes a pair of bead portions each with a bead core therein, the pair of bead portions including a pair of rim contact surfaces that comes into contact with a standard wheel rim under a standard-rim mounted condition in which the tyre is mounted onto the standard wheel rim and inflated to a standard pressure. Each rim contact surface includes a bead bottom surface located inwardly in a tyre radial direction of the bead core and extending in a tyre axial direction, a bead side surface located outwardly in the tyre axial direction of the bead core and extending in the tyre radial direction, and a bead heel surface connecting the bead bottom surface and the bead side surface. Under a virtual-rim mounted condition in which the tyre is not mounted onto a rim but an axial width of the bead side surfaces of the pair of bead portions is held at a rim width of the standard wheel rim, in at least one of the pair of bead portions, a diameter of an intersection of a virtual first straight line that is expanded outwardly in the tyre axial direction from the bead bottom surface and a virtual second straight line that is expanded inwardly in the radial direction from the bead side surface is 99.0% to 99.6% of a rim diameter of the standard wheel rim.

### BRIEF DESCRIPTION OF THE DRAWINGS

FIG. 1 is a cross-sectional view of a motorcycle tyre in accordance with an embodiment of the present invention; and
FIG. 2 is an enlarged view of a bead portion of FIG. 1.

### DETAILED DESCRIPTRION OF THE INVENTION

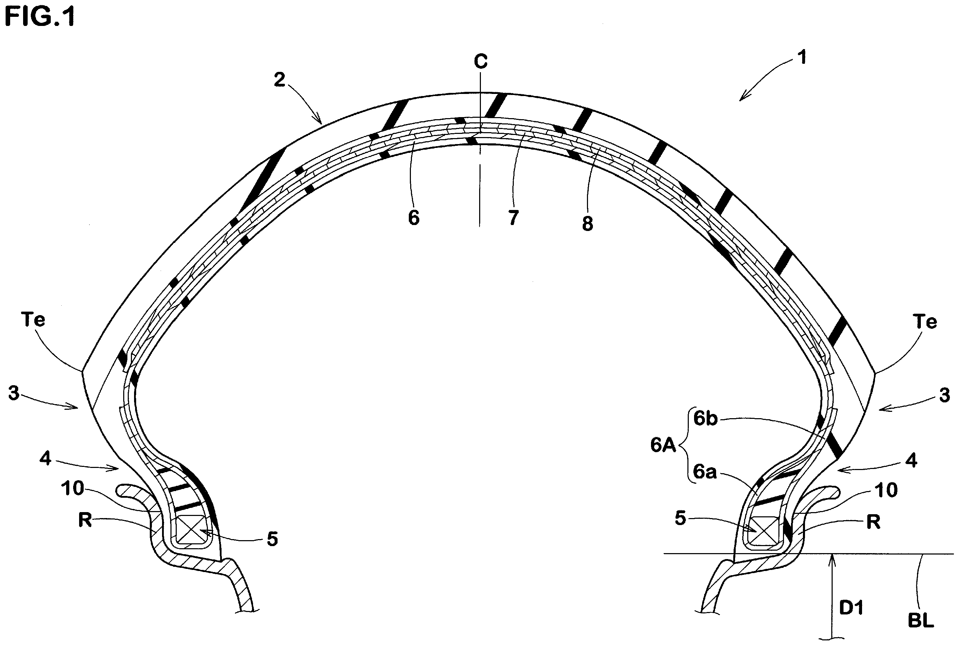

An embodiment of the present invention will be explained below with reference to the accompanying drawings. FIG. 1 is a tyre meridian cross-section including the tyre axis of a motorcycle tyre (hereinafter, simply referred to as "tyre") under a standard-rim mounted condition according to an embodiment. The tyre 1 according to the present embodiment is a tyre for front wheel of motorcycle suitable for on-road sports driving. However, the tyre according to the present invention is not limited to such an aspect.

As used herein, "standard-rim mounted condition" means a condition such that the tyre is mounted onto a standard wheel rim R and inflated to a standard pressure. Unless otherwise noted, the measurements of respective portions of the tyre are values measured under the standard-rim mounted condition.

As used herein, "standard wheel rim R" is a wheel rim officially approved for each tyre by standards organizations on which the tyre is based, wherein the standard wheel rim is the "standard wheel rim" specified in JATMA, the "Design Rim" in TRA, and the "Measuring Rim" in ETRTO, for example. If a tyre is not based on a certain standard, the rim that can fully demonstrate the performance of the tyre is used as the standard wheel rim, e.g., rims recommended by the manufacturer.

As used herein, "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example. If a tyre is not based on a certain standard, the pressure that can fully demonstrate the performance of the tyre is used as the standard pressure, e.g., the pressure recommended by the manufacturer.

As illustrated in FIG. 1, the tyre 1 according to the present embodiment includes a tread portion 2, a pair of sidewall portions 3 and a pair of bead portions 4. The sidewall portions 3 are connected to axially both sides of the tread portion 2. The bead portions 4 are connected to inner sides in the tyre radial direction of the sidewall portions 3. The tread portion 2 includes a ground contacting surface between tread edges Te. The ground contacting surface is curved in an arc-shaped manner protruding outwardly in the tyre radial direction so that a sufficient grounding area can be maintained when turning with a large camber angle. The bead portions 4 have respective bead core 5 therein.

The tyre 1 according to the present embodiment includes a carcass 6 extending from one of the bead portions 4 to the other one of the bead portions 4 through one of the sidewall portions 3, the tread portion 2, and the other one of the sidewall portions 3.

The carcass 6, for example, includes at least one carcass ply 6A having a plurality of carcass cords. The carcass 6 according to the present embodiment is configured to have a single carcass ply 6A. Alternatively, the carcass 6 may include a plurality of carcass plies that are superimposed. The carcass ply 6A includes a main portion 6a and a pair of turn-up portions 6b. The main portion 6a extends, through the tread portion 2 and the pair of sidewall portions 3, between the bead cores 5 of the bead portions 4. The turn-up portions 6b each are connected with the main portion 6a and are turned up around a respective one of the bead cores 5 from axially inside to the outside of the tyre.

The tread portion 2, for example, includes a belt layer 7 and a band layer 8. The belt layer 7, for example, includes a band ply having a plurality of band cords that are oriented at an angle of from 10 to 45 degrees with respect to the tyre circumferential direction. The belt layer 7 according to the present embodiment is configured to have a single belt ply, but may include a plurality of belt plies that are superimposed. The band layer 8, for example, includes a jointless band ply having a band cord that is spirally wound at an angle equal to or less than 5 degrees with respect to the tyre circumferential direction. Such a belt layer 7 and such a band layer 8 may reinforce the tread portion 2 effectively.

Under the standard-rim mounted condition, the pair of bead portions 4 includes a pair of rim contact surfaces 10 that comes into contact with the standard wheel rim R.

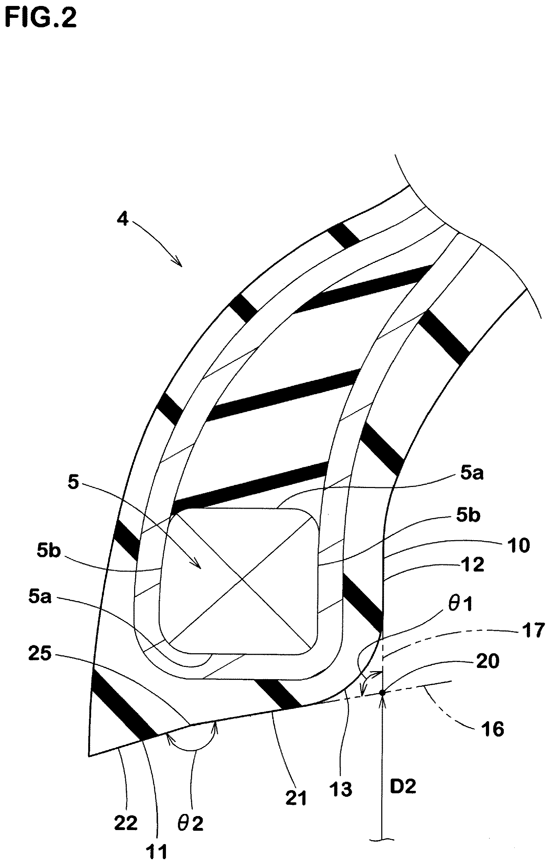

FIG. 2 illustrates an enlarged view of one of the bead portions 4. As illustrated in FIG. 2, one of the pair of rim contact surfaces 10 includes a bead bottom surface 11, a bead side surface 12, and a bead heel surface 13. The bead bottom surface 11 is located inwardly in the tyre radial direction of the bead core 5 and extends in the tyre axial direction. The bead side surface 12 is located outwardly in the tyre axial direction of the bead core 5 and extends in the tyre radial direction. The bead heel surface 13 is configured as an arc-shaped surface that connects the bead bottom surface 11 and the bead side surface 12.

In the present disclosure, under a virtual-rim mounted condition in which the tyre 1 is not mounted onto a rim but an axial width of the bead side surfaces 12 of the pair of bead portions 4 is held at a rim width of the standard wheel rim R, a diameter D2 of an intersection 20 of a virtual first straight line 16 that is expanded outwardly in the tyre axial direction from the bead bottom surface 11 and a virtual second straight line 17 expanded inwardly in the radial direction from the bead side surface 12 is 99.0% to 99.6% of a rim diameter D1 (shown in FIG. 1) of the standard wheel rim R. Note that the virtual first straight line 16 corresponds to the tangent to the bead heel surface 13 on the end of the bead bottom surface 11 side and the virtual first straight line 16 corresponds to the tangent to the bead heel surface 13 on the end of the bead heel surface 13 side. In addition, the diameter D2 corresponds to a diameter of the virtual circle formed when the intersections 20 of the virtual first straight line 16 and the virtual second straight line 17 are assembled over the entire circumference of the tyre.

The tyre 1 according to the present disclosure, by adopting the above configuration, can improve the rim-slip resistance performance and steering stability while maintaining rim-mountability performance. The reason for this is presumed to be the following mechanism.

As a result of various experiments, the inventor has found that the rim-mountability performance of a tyre depends not only on a size of the diameter of the bead baseline BL but also on an angle of the bead side surface 12 with respect to the tyre radial direction. When the tyre is mounted onto the rim, each bead portion 4 must get over a hump of the rim. At this time, it is considered that the larger the angle of each bead side surface 12, the easier the inner diameter of each bead portion 4 expands larger, and the better the rim-mountability performance.

In addition, the inventor has found that the rim-slip resistance performance of a tyre depends not only on a size of the diameter of the bead baseline BL but also on an angle of the bead bottom surface 11 with respect to the tyre axial direction. It is considered that the larger the angle of each bead bottom surface 11, the more each bead portion 4 is mounted firmly on the rim, so that the rim-slip resistance performance can be improved.

As a result of further experiments, for improving both the rim-mountability performance and the rim-slip resistance performance, it has found to be important that the diameter D2 of the intersection 20 of the virtual first straight line 16 and the virtual second straight line 17 be defined within a certain range in order to set angles of the bead side surfaces 12 and the bead bottom surfaces 11 appropriately. In the present disclosure, by setting the diameter D2 to 99.0% to 99.6% of the rim diameter D1 of the standard wheel rim, it is possible to improve the rim-slip resistance performance while maintaining rim-mountability performance. In addition, by improving the rim-slip resistance performance, operations by drivers are accurately transmitted to the tyre, which can improve steering stability.

Hereinafter, a more detailed configuration of the present embodiment will be described. Note that each configuration described below shows a specific aspect of the present embodiment. Thus, the present disclosure can exert the above-mentioned effects even if the tyre does not include the configuration described below. Further, even if any one of the configurations described below is applied independently to the tyre of the present disclosure having the above-mentioned characteristics, the performance improvement according to each additional configuration can be expected. Furthermore, when some of the configurations described below are applied in combination, it is expected that the performance of the additional configurations will be improved. Unless otherwise noted, the configuration of the present embodiment described below is measured in the above-mentioned virtual-rim mounted condition.

In some preferred embodiments, the diameter D2 is set in a range of 99.3% to 99.5% of the rim diameter D1 of the standard wheel rim R. In addition, an angle θ1 between the virtual first straight line 16 and the virtual second straight line 17, for example, is in a range of 90 to 110 degrees, preferably 95 to 105 degrees.

Each bead core 5 according to the present embodiment, in a cross-sectional view of the tyre, has a rectangular cross-sectional shape surrounded by two first sides 5a and two second sides 5b. In addition, corners of the cross-sectional shape where the first sides 5a and the second sides 5b are connected are curved in an arc shape. The first sides 5a extend along the tyre axial direction. The second sides 5b extend along the tyre radial direction. An angle difference between two second sides 5b, for example, is equal to or less than 10 degrees, preferably equal to or less than 5 degrees. In some more preferred embodiments, the second sides 5b extend in substantially parallel with each other. Such a bead core 5 can suppress lateral deformation of the bead portions 4, helping to improve steering stability.

Each bead bottom surface 11 includes a first bottom surface 21 inclined with respect to the tyre axial direction, and a second bottom surface 22 located inwardly in the tyre axial direction of, and connected to the first bottom surface 21. In addition, the second bottom surface 22 has an angle with respect to the tyre axial direction greater than that of the first bottom surface 21. Such a bead bottom surface 11 including the first bottom surface 21 and the second bottom surface 22 can improve rim-mountability performance and rim-slip presentation performance in a well-balanced manner.

In a tyre cross-section under the virtual-rim mounted condition, the first bottom surface 21 according to the present embodiment extends straight. An angle of the first bottom surface 21 with respect to the tyre axial direction, for example, is equal to or less than 15 degrees, preferably equal to or less than 10 degrees, more preferably equal to or less than 7 degrees. Specifically, the above-mentioned angle of the first bottom surface 21 is in a range of 3 to 7 degrees. In some more preferred embodiments, an angle between the first bottom surface 21 and the first sides 5a of the bead core 5 which is adjacent to the first bottom surface 21 may be in a range of 0 to 10 degrees. In the present embodiment, the angle of the first bottom surface 21 is equal to an angle of the virtual first straight line 16 with respect to the tyre axial direction.

In a tyre cross-section under the virtual-rim mounted condition, the second bottom surface 22 according to the present embodiment extends straight. An angle of the second bottom surface 22 with respect to the tyre axial direction, for example, is equal to or less than 30 degrees, preferably equal to or less than 24 degrees. Specifically, the above-mentioned angle of the second bottom surface 22 is in a range of 18 to 24 degrees. Such a second bottom surface 22 can improve rim-slip presentation performance while maintaining rim-mountability performance.

In order to improve rim-mountability performance and rim-slip presentation performance in a well-balanced manner, an angle θ2 between the first bottom surface 21 and the second bottom surface 22 is preferably equal to or more than 150 degrees, more preferably equal to or more than 160 degrees, but preferably equal to or less than 175 degrees, more preferably equal to or less than 170 degrees.

The angle θ2 between the first bottom surface 21 and the second bottom surface 22 is greater than an angle θ1 between the virtual first straight line 16 and the virtual second straight line 17. The difference between the angles θ1 and θ2, for example, is in a range of 60 to 80 degrees, more preferably 65 to 75 degrees. As a result, the pressure of the bead side surface 12 acting on the rim and the pressure of the second bottom surface 22 acting on the rim can be improved in a well-balanced manner, and excellent steering stability can be exhibited.

In a tyre cross-sectional view, a boundary 25 between the first bottom surface 21 and the second bottom surface 22, for example, is located within a region where the bead core 5 is virtually expanded inwardly in the tyre radial direction. In addition, the boundary 25 is preferably located inwardly in the tyre axial direction than the center location of the bead core 5 in the tyre axial direction. A distance in the tyre axial direction between the boundary 25 and the center location of the bead core 5 for example, is in a range of 25% to 35% of a width in the tyre axial direction of the bead core 5. As a result, the second bottom surface 22 can be in contact with the rim firmly, improving durability of the bead portions 4.

In a tyre cross-sectional view, each bead side surface 12 includes a portion that extends straight from the bead heel surface 13. This portion, for example, has an angle equal to or less than 5 degrees with respect to the second side 5b of the bead core 5 that is adjacent to the portion.

At a tyre radial location of the center in the tyre radial direction of the bead core 5, a rubber thickness that is located outwardly in the tyre axial direction of the bead core 5 is preferably equal to or less than 3.0 mm. This makes it easier for the bead portions 4 to get over the humps of the rim and can further improve rim-mountability performance.

While the particularly preferable embodiments of the motorcycle tyre in accordance with the present invention have been described in detail, the present invention is not limited to the illustrated embodiments, but can be modified and carried out in various aspects within the scope of the invention as defined in the appended claims.

### [Example]

Motorcycle tyres (for front wheel) having a size of 120/70ZR17 with the basic structure shown in FIG. 1 were manufactured based on the specifications in Tables 1 to 2. Further, as Comparative Examples 1 and 2, tyres in which the diameter of the intersection of the first straight line and the second straight line as described above are out of the range of the present disclosure were also prototyped. The tyres of Comparative Examples 1 and 2 have substantially the same configuration as the tyres of the Examples except for the above feature. Then, rim-mountability performance, rim-slip resistance performance and steering stability of each test tyre were tested. The common specifications and test methods for each test tyre are as follows.
Rim size: MT3.50
Tyre inner pressure: 250 kPa
Test motorcycle displacement: 1000cc

### Rim-mountability performance test:

During a process of the tyre being mounted onto the rim, the maximum internal pressure when the bead potions of each test tyre overcame the humps of the rim was measured while the tyre internal pressure increased. The test results are the reciprocal of the maximum internal pressure, and are shown by an index with Comparative Example 1 as 100. The larger the value, the smaller the maximum internal pressure and the better the rim-mountability performance.

### Rim-slip resistance performance test:

In accordance with JIS-D4230, a lateral load was applied to the bead potions of each test tyre that was mounted onto the rim and that was not inflated, and resistance force was measured when the bead portions came off the rim. The test results are shown by an index with the resistance force of Comparative Example 1 as 100, and the larger the value, the better the rim-slip presentation performance.

### Steering stability test:

The steering stability when driving on a circuit with a test motorcycle equipped with each test tyres was evaluated by the driver's sensuality. The test results are scores with Comparative Example 1 as 100, and the larger the value, the better the steering stability.

Tables 1 and 2 show the test results.

**[Table 1]**

| | Ref. 1 | Ref. 2 | Ex. 1 | Ex. 2 | Ex. 3 | Ex. 4 | Ex. 5 | Ex. 6 | Ex. 7 |
|---|---|---|---|---|---|---|---|---|---|
| Diameter D2 / rim diameter D1 (%) | 99.8 | 98.8 | 99.5 | 99.0 | 99.1 | 99.4 | 99.6 | 99.5 | 99.5 |
| Angle of first bottom surfaces (deg.) | 10 | 10 | 10 | 10 | 10 | 10 | 10 | 5 | 5 |
| Angle of second bottom surfaces (deg.) | 17 | 17 | 17 | 17 | 17 | 17 | 17 | 17 | 23 |
| Rubber thickness located axially outside bead cores (mm) | 4.0 | 4.0 | 4.0 | 4.0 | 4.0 | 4.0 | 4.0 | 4.0 | 4.0 |
| Rim-mountability performance (index) | 100 | 60 | 100 | 95 | 95 | 100 | 100 | 120 | 120 |
| Rim-slip resistance performance (index) | 100 | 125 | 110 | 120 | 115 | 115 | 110 | 110 | 115 |
| Steering stability (score) | 100 | 115 | 120 | 125 | 120 | 120 | 105 | 120 | 125 |

**[Table 2]**

| | Ex. 8 | Ex. 9 | Ex. 10 | Ex. 11 |
|---|---|---|---|---|
| Diameter D2 / rim diameter D1 (%) | 99.5 | 99.5 | 99.5 | 99.5 |
| Angle of first bottom surfaces (deg.) | 5 | 5 | 5 | 5 |
| Angle of second bottom surfaces (deg.) | 31 | 23 | 23 | 23 |
| Rubber thickness located axially outside bead cores (mm) | 4.0 | 2.0 | 3.0 | 5.0 |
| Rim-mountability performance (index) | 100 | 130 | 125 | 110 |
| Rim-slip resistance performance (index) | 120 | 115 | 115 | 115 |
| Steering stability (score) | 125 | 125 | 125 | 125 |

As a result of the test, it was confirmed that the tyres of the examples improved rim-slip resistance performance and the steering stability while maintaining rim-mountability performance.

## Claims

1. A motorcycle tyre (1) comprising:
a pair of bead portions (4) each with a bead core (5) therein, the pair of bead portions (4) comprising a pair of rim contact surfaces (10) that comes into contact with a standard wheel rim (R) under a standard-rim mounted condition in which the tyre (1) is mounted onto the standard wheel rim (R) and inflated to a standard pressure,
wherein
each rim contact surface (10) comprises
a bead bottom surface (11) located inwardly in a tyre radial direction of the bead core (5) and extending in a tyre axial direction,
a bead side surface (12) located outwardly in the tyre axial direction of the bead core (5) and extending in the tyre radial direction, and
a bead heel surface (13) connecting the bead bottom surface (11) and the bead side surface (12),
**characterized in that**
under a virtual-rim mounted condition in which the tyre (1) is not mounted onto a rim (R) but an axial width of the bead side surfaces (12) of the pair of bead portions (4) is held at a rim width of the standard wheel rim (R), in at least one of the pair of bead portions (4), a diameter (D2) of an intersection (20) of a virtual first straight line (16) that is expanded outwardly in the tyre axial direction from the bead bottom surface (11) and a virtual second straight line (17) that is expanded inwardly in the radial direction from the bead side surface (12) is 99.0% to 99.6% of a rim diameter (D1) of the standard wheel rim (R);
wherein at a tyre radial location of a center in the tyre radial direction of the bead core (5), a rubber thickness that is located outwardly in the tyre axial direction of the bead core (5) is equal to or less than 3.0 mm.

2. The motorcycle tyre according to claim 1, wherein
the bead bottom surface (11) comprises a first bottom surface (21), and a second bottom surface (22) located inwardly in the tyre axial direction of, and connected to the first bottom surface (21), and
the second bottom surface (22) has an angle with respect to the tyre axial direction greater than that of the first bottom surface (21).

3. The motorcycle tyre according to claim 2, wherein
an angle of the first bottom surface (21) with respect to the tyre axial direction is equal to or less than 7 degrees.

4. The motorcycle tyre according to claim 2 or 3, wherein
an angle of the second bottom surface (22) with respect to the tyre axial direction is equal to or less than 24 degrees.

## Patentansprüche

1. Motorradreifen (1), umfassend:
ein Paar Wulstabschnitte (4) mit jeweils einem Wulstkern (5) darin, wobei das Paar Wulstabschnitte (4) ein Paar Felgenkontaktflächen (10) umfasst, die mit einer Standardradfelge (R) in einem Standardfelgenaufzugszustand in Kontakt kommen, in dem der Reifen (1) auf der Standardradfelge (R) aufgezogen und auf einen Standarddruck aufgepumpt ist,
wobei
jede Felgenkontaktfläche (10) umfasst
eine Wulstgrundfläche (11), die sich in einer Reifenradialrichtung innen von dem Wulstkern (5) befindet und sich in einer Reifenaxialrichtung erstreckt,
eine Wulstseitenfläche (12), die sich in der Reifenaxialrichtung außen von dem Wulstkern (5) befindet und sich in der Reifenradialrichtung erstreckt, und
eine Wulstfersenfläche (13), die die Wulstgrundfläche (11) und die Wulstseitenfläche (12) verbindet,
**dadurch gekennzeichnet, dass**
in einem virtuellen Felgenaufzugszustand, in dem der Reifen (1) nicht auf einer Felge (R) aufgezogen ist, aber eine axiale Breite der Wulstseitenflächen (12) des Paars Wulstabschnitte (4) auf einer Felgenbreite der Standardradfelge (R) gehalten ist, in mindestens einem des Paars Wulstabschnitte (4) ein Durchmesser (D2) eines Schnittpunkts (20) einer virtuellen ersten geraden Linie (16), die in der Reifenaxialrichtung von der Wulstgrundfläche (11) nach außen erweitert ist, und einer virtuellen zweiten geraden Linie (17), die in der Radialrichtung von der Wulstseitenfläche (12) nach innen erweitert ist, 99,0 % bis 99,6 % eines Felgendurchmessers (D1) der Standardradfelge (R) beträgt;
wobei an einer Reifenradialposition einer Mitte in der Reifenradialrichtung des Wulstkerns (5) eine Gummidicke, die sich in der Reifenaxialrichtung außen von dem Wulstkern (5) befindet, gleich oder kleiner als 3,0 mm ist.

2. Motorradreifen nach Anspruch 1, wobei
die Wulstgrundfläche (11) eine erste Grundfläche (21) und eine zweite Grundfläche (22) umfasst, die sich in der Reifenaxialrichtung innen von der ersten Grundfläche (21) befindet und mit dieser verbunden ist, und
die zweite Grundfläche (22) einen Winkel in Bezug auf die Reifenaxialrichtung aufweist, der größer als der der ersten Grundfläche (21) ist.

3. Motorradreifen nach Anspruch 2, wobei ein Winkel der ersten Grundfläche (21) in Bezug auf die Reifenaxialrichtung gleich oder kleiner als 7 Grad ist.

4. Motorradreifen nach Anspruch 2 oder 3, wobei ein Winkel der zweiten Grundfläche (22) in Bezug auf die Reifenaxialrichtung gleich oder kleiner als 24 Grad ist.

## Revendications

1. Pneumatique pour motocyclette (1) comprenant :
une paire de portions de talon (4) avec chacune une âme de talon (5) à l'intérieur de celle-ci, la paire de portions de talon (4) comprenant une paire de surfaces de contact de jante (10) qui viennent en contact avec une jante de roue standard (R) dans une condition de montage de jante standard dans laquelle le pneumatique (1) est monté sur la jante de roue standard (R) et est gonflé à une pression standard,
dans lequel
chaque surface de contact de jante (10) comprend
une surface de fond de talon (11) située à l'intérieur dans une direction radiale du pneumatique de l'âme de talon (5) et s'étendant dans une direction axiale du pneumatique,
une surface latérale de talon (12) située à l'extérieur dans la direction radiale du pneumatique de l'âme de talon (5) et s'étendant dans la direction radiale du pneumatique, et
une surface arrière de talon (13) connectant la surface de fond de talon (11) et la surface latérale de talon (12),
**caractérisé en ce que**
dans une condition de montage de jante virtuelle dans laquelle le pneumatique (1) n'est pas monté sur une jante (R) mais dans laquelle une largeur axiale des surfaces latérales de talon (12) de la paire de portions de talon (4) est maintenue à une largeur de jante de la jante de roue standard (R), dans l'une au moins de la paire de portions de talon (4), un diamètre (D2) d'une intersection (20) d'une première ligne droite virtuelle (16) qui est en expansion vers l'extérieur dans la direction axiale du pneumatique depuis la surface de fond de talon (11) et d'une seconde ligne droite virtuelle (17) qui est en expansion vers l'intérieur dans la direction radiale depuis la surface latérale de talon (12) est de 99,0 % à 99,6 % d'un diamètre de jante (D1) de la jante de roue standard (R) ;
dans lequel, au niveau d'un emplacement radial du pneumatique d'un centre dans la direction radiale du pneumatique de l'âme de talon (5), une épaisseur de caoutchouc qui est située à l'extérieur dans la direction radiale du pneumatique de l'âme de talon (5) est égale ou inférieure à 3,0 mm.

2. Pneumatique pour motocyclette selon la revendication 1, dans lequel
la surface de fond de talon (11) comprend une première surface de fond (21), et une seconde surface de fond (22) située à l'intérieur dans la direction axiale du pneumatique de la première surface de fond (21) et connectée à celle-ci, et
la seconde surface de fond (22) a un angle par rapport à la direction axiale du pneumatique supérieur à celui de la première surface de fond (21).

3. Pneumatique pour motocyclette selon la revendication 2, dans lequel
un angle de la première surface de fond (21) par rapport à la direction axiale du pneumatique est égal ou inférieur à 7 degrés.

4. Pneumatique pour motocyclette selon la revendication 2 ou 3, dans lequel
un angle de la seconde surface de fond (22) par rapport à la direction axiale du pneumatique est égal ou inférieur à 24 degrés.
